# EUROPÄISCHE PATENTSCHRIFT

(11) **EP 0 609 821 B1**
(45) Veröffentlichungstag und Bekanntmachung des Hinweises auf die Patenterteilung: **25.11.1998**
(21) Anmeldenummer: 94101438.3
(22) Anmeldetag: 01.02.1994
(51) Int. Cl.: G08C 23/00, H04B 10/14

(54) **Fernsteuerungsempfänger**
Remote control signal receiver
Récepteur de télécommande

(30) Priorität: 03.02.1993 CH 316/93
(43) Veröffentlichungstag der Anmeldung: 10.08.1994
(73) Patentinhaber: OERLIKON CONTRAVES AG, 8050 Zürich (CH)
(72) Erfinder: Ehrenmann, Daniel, CH-8964 Rudolfstetten (CH)
(74) Vertreter: Hotz, Klaus, Dipl.-El.-Ing./ETH Patentanwalt

(56) Entgegenhaltungen:
- GB-A- 2 245 119
- US-A- 4 850 040
- TOUTE L'ELECTRONIQUE no. 508, November 1985, PARIS FR, pages 54 - 60 CH.VISSIERE 'MISE EN OEUVRE DES CIRCUITS INTEGRES DE TELECOMMANDE'
- PATENT ABSTRACTS OF JAPAN vol. 9, no. 325 (E-368)(2048) 20 December 1985 & JP-A-60 157 346 (MATSUSHITA DENKO K. K.) 17 August 1985
- PATENT ABSTRACTS OF JAPAN vol. 011, no. 145 (E-505)12 May 1987 & JP-A-61 284 132 (NEC CORP) 15 December 1986

## Beschreibung

Die Erfindung betrifft einen Fernsteuerungsempfänger nach dem Oberbegriff des Patentanspruchs 1.

Heutige Fernsteuerungsempfänger weisen in der Regel einen Lichtdetektor (z.B. eine Photodiode) zum Empfang der Befehlssignale auf, der an eine Aufbereitungselektronik angeschlossen ist. Diese Aufbereitungselektronik nimmt in gewissem Rahmen eine Verstärkung, Filterung, gegebenenfalls eine Digitalisierung und Auswertung der Signale vor und ist, um die gewünschte Empfangssicherheit zu gewährleisten, sehr aufwendig. Deshalb ist sie in modernen Geräten als integrierte Schaltung ausgeführt und in einem integrierten Fernsteuerungsbaustein (sog. Fernsteuerungs-IC) untergebracht. Solche Bausteine werden von verschiedenen Herstellern angeboten. Sie benötigen in der Regel nur wenige externe Komponenten und besitzen einen Eingang, an welchen der Lichtdetektor direkt angeschlossen werden kann. Ein Beispiel für eine derartige Schaltung ist z.B. in "Toute l'Electronique", No. 508, November 1985 (Paris, Frankreich) beschrieben oder kann dem Datenblatt eines Empfänger-Bausteins entnommen werden.

Dank der Integration der wichtigsten Schaltungsteile in einem Baustein kann somit der Fernsteuerungsempfänger sehr preiswert hergestellt werden.

Ein Nachteil dieser üblichen Systeme ist jedoch ihre begrenzte Reichweite. Diese beträgt bei wenig Umgebungslicht in der Regel höchstens 10 bis 20 Meter, falls der Sender gut auf den Empfänger ausgerichtet wird. Bei viel Umgebungslicht, insbesondere bei Sonnenschein, wird diese Reichweite drastisch reduziert.

Ferner ist aus der JP-A-60 157 346 ein Fernsteuerungsempfänger bekannt, der sich aus zwei im wesentlichen gleichen Bauteilen, nämlich einem Eingangsteil und einem Aufbereitungsteil, zusammensetzt. Die Übertragung des Signals vom ersten Teil zum zweiten Teil kann ausschliesslich optisch erfolgen. Da die beiden Teile gleich aufgebaut sind, sind sie nicht dazu geeignet, ihre spezifischen Funktionen in optimaler Weise Funktionen auszuüben.

Deshalb stellt sich die Aufgabe, einen Fernsteuerungsempfänger zu entwickeln, der diese Nachteile nicht aufweist. Insbesondere soll er eine gute Reichweite bzw. Empfindlichkeit aufweisen und trotzdem nicht wesentlich teuerer als bestehende Systeme sein.

Diese Aufgabe wird vom Fernsteuerungsempfänger gemäss dem ersten Patentanspruch erfüllt.

Herkömmliche integrierte Fernsteuerungsbausteine können nicht ohne angeschlossenen Lichtdetektor betrieben werden, da sonst ihre Eingangsstufe nicht im Arbeitsbereich ist. Somit erscheint es unmöglich, das Fernsteuerungs-IC direkt mit einem elektrischen Signal, z.B. aus einem Vorverstärker, zu speisen. Dieses Problem wird erfindungsgemäss so gelöst, dass am Eingang des Fernsteuerungs-ICs eine Ersatzlast angeschlossen wird, deren Impedanz im wesentlichen jener des vorgesehenen Lichtdetektors entspricht, und dass dann das eigentliche Signal zusätzlich eingekoppelt wird.

Damit wird es möglich, das Signal eines Lichtempfängers zu verstärken und gegebenenfalls zu filtern, bevor es in den integrierten Schaltkreis eingekoppelt wird.

Somit können die guten Auswerte- und Verarbeitungseigenschaften eines Fernsteuerungs-ICs ausgenutzt werden, ohne dass dessen begrenzte Signalempfindlichkeit in Kauf genommen werden muss.

Trotzdem kann das System mit bekannten Anlagen kompatibel bleiben, und insbesondere auch Signale herkömmlicher Sender verarbeiten.

Die erfindungsgemässe Vorrichtung kann auch speziellen Umgebungsbedingungen angepasst werden, indem das Signal vor der Einkopplung z.B. geeignete Filter durchläuft, oder indem Detektoren mit speziellen Eigenschaften verwendet werden können.

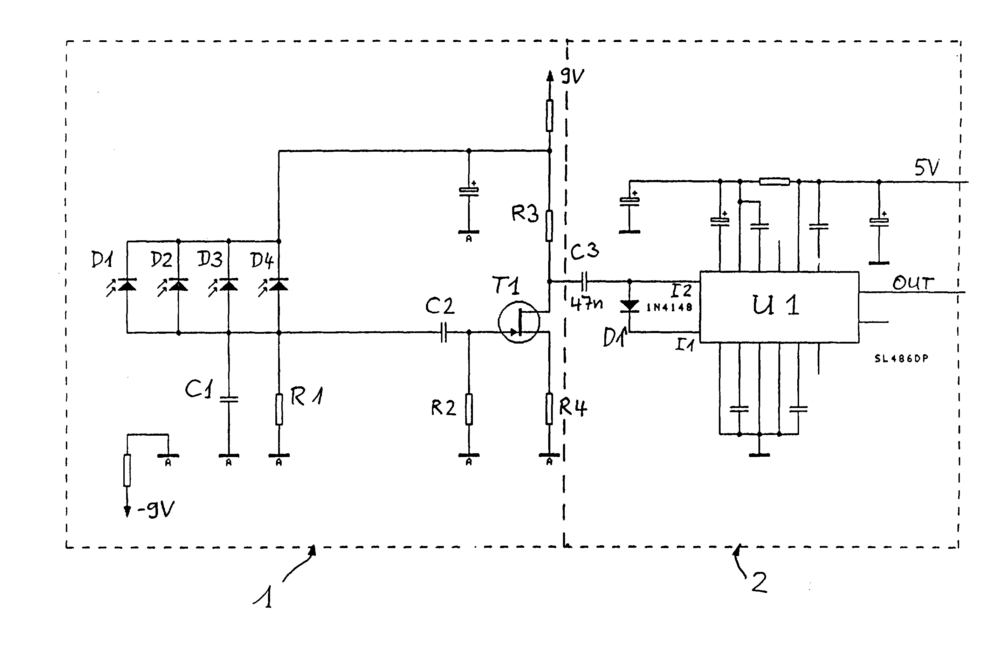

Weitere Vorteile und Anwendungen der Erfindung ergeben sich aus der nachfolgenden Beschreibung eines Ausführungsbeispiels anhand der Figur.

Die Figur zeigt ein Schaltbild der wesentlichen Elemente des Ausführungsbeispiels.

Der Empfänger besteht im wesentlichen aus einem Eingangsteil 1, dessen Signal dem Aufbereitungsteil 2 zugeführt wird.

Der Eingangsteil umfasst eine oder mehrere infrarotempfindliche Photodioden D1... als Lichtempfänger. Das Signal der Photodioden wird durch die Elemente R2, C1 und C2 gefiltert. Mit dieser Filterung werden insbesondere Störsignale sowie die Hintergrundhelligkeit im tiefen Frequenzbereich sowie Rauschen hoher Frequenz unterdrückt. Im Vorverstärker T1, R3, R4 wird das gefilterte Signal sodann verstärkt und die Impedanz angepasst.

Ueber den Kondensator C3 wird das Signal dem Aufbereitungsteil 2 zugeführt.

Der Aufbereitungsteil 2 besteht im wesentlichen aus dem Fernsteuerungs-IC U1, der Diode D1', dem Koppelkondensator C3 sowie einigen weiteren passiven Elementen zur Beschaltung von U1.

Der Fernsteuerungs-IC U1 ist ein handelsüblicher Baustein, wie er in der Einleitung bereits erwähnt wurde. Er umfasst Verstärkungs- und Aufbereitungsstufen, und generiert ein Ausgangssignal OUT, welches weiter verarbeitet werden kann. Es ist zu betonen, dass nebst dem hier verwendeten Baustein (SL 486DP, Plessey) eine Vielzahl ähnlicher integrierter Bauteile verschiedener Hersteller verwendet werden können.

Solche Fernsteuerungs-ICs weisen einen Eingang auf, an welchen ein Lichtdetektor (Photodiode) direkt angeschlossen werden kann. Im hier verwendeten Bauteil U1 sind dies die Anschlüsse I1 und I2. In herkömmlichen Fernsteuerungsempfängern wird zwischen diese Anschlüsse eine Photodiode gelegt. Diese Photodiode wird von der Eingangsstufe des Bausteins U1 angesteuert. Wird die Photodiode entfernt, so befindet sich die Eingangsstufe von U1 in einem undefinierten, nicht vorgesehenen Zustand und ist nicht fähig, ein Eingangssignal zu verarbeiten.

Deshalb wurde in der Schaltung gemäss der Figur die Photodiode durch eine handelsübliche Gleichrichterdiode D1' ersetzt. Diese Diode D1' weist eine ähnliche Strom-Spannungscharakteristik auf, wie die eigentlich vorgesehene Photodiode. Deshalb wird dank dieser Diode die Eingangsstufe der Schaltung U1 in ihren normalen Arbeitszustand gebracht und ist somit zur Signalaufnahme bereit.

Die Signale des Vorverstärkers werden über den Kondensator C3 in den Eingang I2 eingekoppelt und gelangen somit in den Baustein U1, wo sie verarbeitet werden können.

Auf diese Weise wird es möglich, das Signal der Detektoren zuerst zu verstärken, bevor es in einem handelsüblichen integrierten Fernsteuerungsbaustein U1 aufbereitet wird.

Wie im Beispiel gezeigt wird, kann das Signal vom Detektor zusätzlich gefiltert werden. Dazu können beliebige Filter jeglicher Art verwendet werden. Insbesondere können z.B. Filter gegen das 50 bzw. 100 Hz Signal netzbetriebener Beleuchtungskörper vorgesehen sein.

Auch kann der Detektor in optimaler Weise angeschlossen werden. In der Schaltung gemäss der Figur wird z.B. die Vorspannung über den Photodioden relativ gross gewählt (bis 18 Volt), was die Signalgrösse erhöht.

Es ist auch denkbar, andere Arten von Detektoren zu verwenden, wie z.B. schnelle Photozellen, LDR, Photomultiplier usw.

Die Einkopplung des Signals vom Vorverstärker geschieht im vorliegenden Beispiel kapazitiv über den Kondensator C3. Es ist jedoch auch möglich, das Signal in anderer, dem Fachmann bekannter Weise einzukoppeln. So ist zum Beispiel eine optische Einkopplung (über Optokoppler oder dergl.) oder eine induktive Einkopplung denkbar. Im Falle einer optischen Einkopplung über Optokoppler kann ein Koppler mit Photodiode verwendet werden, wobei die Photodiode gleichzeitig als Ersatzlast D1' dient.

In der Schaltung gemäss der Figur wird eine Gleichrichterdiode D1' als Ersatzlast am Eingang der integrierten Schaltung U1 verwendet. Es sind aber andere Bauteile oder Schaltungen denkbar, die diese Aufgabe übernehmen können. Dabei ist zu beachten, dass die Ersatzlast im Spannungsbereich und allenfalls Frequenzbereich, d.h. im Detektorarbeitsbereich, in welchem sie von der integrierten Schaltung betrieben wird, im wesentlichen die gleiche Strom-Spannungskennlinie (Impedanz) wie eine Photodiode aufweist. Dies wird am einfachsten durch eine Gleichrichterdiode erreicht. Es kann dazu jedoch auch eine Photodiode, eine Basis-Emitterstrecke eines Bipolartransistors oder ein anderes Bauteil mit ähnlichen Eigenschaften vorgesehen sein. Es sind gegebenenfalls auch weitere Lösungen z.B. mit Konstantstromquellen, Vorspannungsquellen, Widerstandsnetzwerken usw. denkbar, insbesondere wenn der Detektorarbeitsbereich relativ eng ist.

In all diesen Fällen erlaubt es die Ersatzlast, die Eingangsstufe des Bausteins U1 in ihren Arbeitsbereich zu bringen, so dass das eingekoppelte Signal verarbeitet werden kann. Somit wird es möglich, das Signal des Lichtempfängers in beliebiger Weise aufzubereiten, bevor es an den Fernsteuerungs-IC U1 übergeben wird.

## Patentansprüche

1. Fernsteuerungsempfänger, umfassend
- einen Eingangsteil (**1**) mit einem Lichtempfänger (**D1, D2, D3, D4**) und einem Vorverstärker (**T1, R3, R4**),
- einen Aufbereitungsteil (**2**), der an den Eingangsteil (**1**) angeschlossen ist,
- mindestens einen im Aufbereitungsteil (**2**) enthaltenen integrierten Fernsteuerungsbaustein (**U1**) zum Aufbereiten empfangener Signale, in dessen Eingang (**I1, I2**) das Ausgangssignal des Eingangsteils (**1**) eingekoppelt ist, und
- eine Ersatzlast (**D1'**), welche einen ursprünglich im Aufbereitungsteil (**2**) eingebauten und für eine separate Verwendung des Aufbereitungsteils (**2**) vorgesehenen, eine geringere Empfindlichkeit als der Lichtempfänger (**D1, D2, D3, D4**) des Eingangsteils (**1**) aufweisenden Lichtdetektor des Aufbereitungsteils (**2**) ersetzt, wobei die Ersatzlast (**D1'**) eine im wesentlichen gleiche Impedanz aufweist wie der durch sie ersetzte Lichtdetektor, wobei der Eingang (**I1, I2**) des Aufbereitungsteils (**2**) zum direkten Anschluß des durch die Ersatzlast (**D1'**) ersetzten Lichtdetektors ausgertalted ist.

2. Fernsteuerungsempfänger nach Patentanspruch **1**,
**dadurch gekennzeichnet,**
dass die Einkoppelung des Ausgangssignals des Eingangsteils (**1**) in den Eingang des Fernsteuerbausteines **(U1)** kapazitiv oder induktiv erfolgt.

3. Fernsteuerungsempfänger nach Patentanspruch **1**,
**dadurch gekennzeichnet,**
dass die Einkoppelung des Ausgangssignals des Eingangsteils (**1**) in den Eingang des Fernsteuerbausteines **(U1)** optisch erfolgt.

4. Fernsteuerungsempfänger nach Patentanspruch **3**,
**dadurch gekennzeichnet,**
dass ein optischer Koppler mit einer Photodiode verwendet wird, wobei die Photodiode gleichzeitig als Ersatzlast (**D1'**) dient.

## Claims

1. Remote control receiver comprising
- an input part (1) with a light receptor (D1, D2, D3, D4) and a preamplifier (T1, R3, R4),
- an editing part (2), which is connected to the input part (1),
- at least one integrated remote control module (Ul) contained in the editing part (2) for editing received signals, into the input (l1, l2) of which the output signal of the input part (1) is coupled, and
- a dummy load (D1'), which replaces a light detector of the editing part (2) installed originally in the editing part (2) and provided for separate use of the editing part (2), and having a lower sensitivity than the light receptor (D1, D2, D3, D4) of the input part (1), whereby the dummy load (D1') has essentially the same impedance as the light detector it replaces, whereby the input (l1, l2) of the editing part (2) is constructed for direct connection of the light detector replaced by the dummy load (D1').

2. Remote control receiver according to Claim 1, characterised in that the output signal of the input part (1) is coupled into the input of the remote control module (U1) capacitively or inductively.

3. Remote control receiver according to Claim 1, characterised in that the output signal of the input part (1) is optically coupled into the input of the remote control module (U1).

4. Remote control receiver according to Claim 3, characterised in that an optical coupler with a photodiode is used, whereby the photodiode at the same time acts as dummy load (D1').

## Revendications

1. Récepteur de télécommande,
caractérisé en ce qu'il comprend :
- une partie d'entrée (1) avec un récepteur de lumière (D1, D2, D3, D4) et un préamplificateur (T1, R3, R4),
- une partie de préparation (2) qui est raccordée à la partie d'entrée (1),
- au moins un bloc de télécommande (U1), intégré, qui est contenu dans la partie de préparation (2) et qui sert à préparer des signaux reçus, bloc à l'entrée duquel (I1, I2) est couplé le signal de sortie de la partie d'entrée (1), et
- une charge de remplacement (D1') qui remplace le détecteur de lumière de la partie de préparation (2), initialement incorporé dans la partie de préparation (2) et prévu pour une utilisation séparée de la partie de préparation (2), détecteur qui présente une sensibilité plus faible que le récepteur de lumière (D1, D2, D3, D4) de la partie d'entrée (1), la charge de remplacement (D1') présentant une impédance sensiblement égale à celle du détecteur de lumière remplacé par celle-ci, l'entrée (I1, I2) de la partie de préparation (2) étant équipée pour le raccordement direct du détecteur de lumière remplacé par la charge de remplacement (D1').

2. Récepteur de télécommande, selon la revendication 1,
caractérisé en ce que
le couplage du signal de sortie de la partie d'entrée (1) dans l'entrée du bloc de télécommande (U1) a lieu de manière capacitive ou inductive.

3. Récepteur de télécommande, selon la revendication 1,
caractérisé en ce que
le couplage du signal de sortie de la partie d'entrée (1) dans l'entrée du bloc de télécommande (U1) a lieu de manière optique.

4. Récepteur de télécommande, selon la revendication 3,
caractérisé en ce qu'
on utilise un coupleur optique avec une photodiode, la photodiode servant en même temps de charge de remplacement (D1').
